Europäisches Patentamt

(19) European Patent Office

Office européen des brevets

(11) Publication number: **0 048 310**
**B1**

(12) **EUROPEAN PATENT SPECIFICATION**

(45) Date of publication of patent specification: **03.12.86**

(21) Application number: **80303313.3**

(22) Date of filing: **22.09.80**

(51) Int. Cl.⁴: **B 01 D 46/52** // B01D29/26, B01D46/24

(54) Liquid-gas separator.

<table>
<tr><td>(43) Date of publication of application:<br><b>31.03.82 Bulletin 82/13</b></td><td>(73) Proprietor: <b>AIR-MAZE CORPORATION</b><br><b>Suite 2250 20 North Clark Street</b><br><b>Chicago, Illinois 60602 (US)</b></td></tr>
<tr><td>(45) Publication of the grant of the patent:<br><b>03.12.86 Bulletin 86/49</b></td><td>(72) Inventor: <b>Ting, C. Tao</b><br><b>25000 Miles Road</b><br><b>Cleveland Ohio 44128 (US)</b></td></tr>
<tr><td>(84) Designated Contracting States:<br><b>BE DE FR GB IT NL SE</b></td><td>(74) Representative: <b>Matthews, Howard Nicholas et al</b><br><b>MATTHEWS HADDAN & CO Haddan House 33 Elmfield Road</b><br><b>Bromley Kent BR1 1SU (GB)</b></td></tr>
<tr><td>(56) References cited:<br>CH-A- 619 152<br>DE-C- 721 537<br>DE-C- 852 839<br>FR-A-1 349 089<br>US-A-1 566 088<br>US-A-1 883 715<br>US-A-2 864 505<br>US-A-2 865 510<br>US-A-3 552 553<br>US-A-3 592 767<br>US-A-3 920 428<br>US-A-4 050 237<br>US-A-4 089 783</td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates generally to liquid separators having plural distinct elements mounted concentrically. More particularly, this invention has reference to an air-oil separator having pleated agglomerator media.

Many problems remain in the prior art devices. One problem lies in the excessive pressure drop that occurs as the fluid passes through the filtering media. Another problem lies in the excessively large size required for prior art filters having an air flow capacity sufficient for use with compressors. Another problem lies in the tendence of prior art filtering media to compress under the air pressures encountered in a compressor exhaust system and thereby decrease the operating efficiency of the compressor system.

In United States patent specification No. 4050237 there is described a demister assembly comprising concentric annular filter elements arranged inside an outer cylinderical gas permeable casing between end supports to provide a first filtering stage and a second filtering stage. In this arrangement the first (radially outer) stage consists of polythene foam layers 11, 12 and the second stage consists of two convoluted aluminium mesh sheets 3 inside which is a mat 9 of glass fibres.

According to the present invention a liquid gas separator comprises a series of concentric annular filter elements arranged inside an outer cylindrical gas permeable casing between end supports to provide a first filtering stage arranged to agglomerate fine liquid droplets entrained in gas entering the separator into larger liquid droplets, and a second filtering stage arranged to separate such larger droplets from gas leaving the separator; characterised in that the first filter stage comprises disposed between two supporting gas permeable sheets at least two layers of glass fibre medium with an intermediate layer of glass fibre sheet to form a sandwich construction, the sandwich being folded into a sinuously pleated arrangement to form a first of said filter elements; and in that said second filter stage is disposed inside the first filter stage and comprises radially separated second and third filter elements supported by respective second and third cylindrical gas permeable members against the pressure of gas flowing through the filter elements.

The first stage serves to agglomerate oil mist into large drops which are removed by the second stage and an efficient action is achieved with minimal reduction in pressure drop.

FIGURE 1 is a fragmentary cross sectional view of an embodiment of the separator of the present invention.

FIGURE 2 is a fragmentary cross sectional view of a typical prior art separator.

FIGURE 3 is an elevational view, in section, of a portion of another embodiment of the separator of the present invention.

FIGURE 4 shows a detail of a horizontal installation of a separator of the present invention.

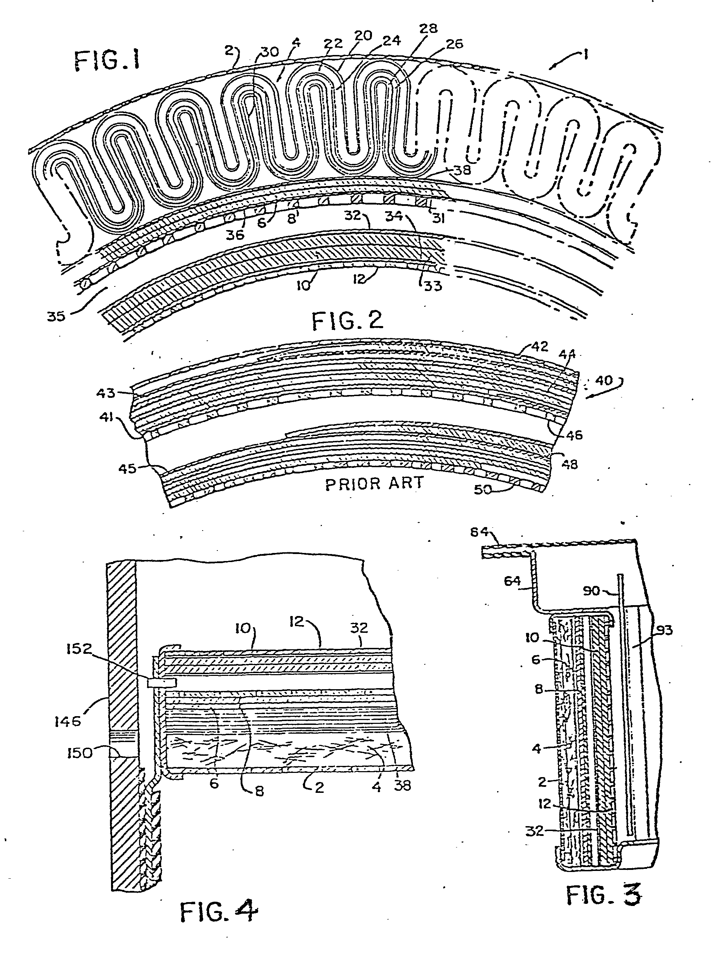

Referring now to Figure 1, the separator of the present invention is shown generally by the numeral 1. As will become apparent, the general purpose of the separator 1 is to remove oil mist from the pressurized air exhausted from a compressor outlet.

The separator 1 has two stages. The first filter stage 4 is positioned adjacent the outer wall 2 of the separator 1. The second filter stage is a double filtering stage having two filter elements 6 and 10 positioned adjacent inner gas permeable members or walls 8 and 12 of the separator 1. Preferably, the separator walls 2, 8 and 12 are perforated steel cylinders.

The first filter stage 4 has a pleated multilayer agglomerator medium. The outer supporting gas permeable sheet or layer 20 of the agglomerator medium is a single layer of mesh metal screen. Similarly, the inner supporting gas permeable sheet or layer 30 is a single layer of mesh metal screen. The intermediate layer 24 of the agglomerator medium is a single layer of glass fibre sheet. Positioned between the glass fibre sheet 24 and the adjacent supporting gas permeable sheets 20 and 30 are intermediate layers 22, 26 formed of a glass fibre medium. In this embodiment a further layer, 28, of glass fibre medium is disposed downstream of the two layers 22 and 26. A single layer of glass fibre medium 22 is positioned between the glass fibre sheet 24 and the outer gas permeable sheet 20. Two layers of glass fibre medium 26 and 28 are positioned between the glass fibre medium 26 and the inner gas permeable sheet 30. Preferably, the glass fibre sheet 24 has a low density and the glass fibre medium 22, 26 and 28 has a substantially higher density. The latter may be used without the intermediate sheet 24.

Various other agglomerator materials may be substituted without departing from the scope of the present invention. Similarly, various other layering arrangements which will be obvious to persons skilled in the art do not depart from the scope of the present invention. In particular, the further layer 28 may not be present, since it is not essential to the proper working of the invention. However, the specific agglomerator materials and layering arrangement described is preferred. This agglomerator structure proved high resistant to compressive forces exerted by the pressurized air passing through the filter. In addition, the preferred agglomerator 4 caused little pressure drop in the air passing through the filter and performed the agglomerating function, later described in greater detail, effectively.

The filter elements 6 and 10 in the second stage have two layers of filter medium 31 and 33 positioned between vinyl coated glass fibre scrims 32, 34, 36 and 38. The outer filter element 6 is held against the inner circumference of the first filter stage 4 by a perforated steel cylinder 8 concentrically spaced within the outer wall 2 of the separator 1. The inner filter element 10 is secured adjacent the inner wall 12 of the separator 1. A cylindrical space 35 is provided between the inner and outer filter elements 6 and 10.

The filter elements 6 and 10 separate oil from air in a manner more fully described later. The second stage facilitates the draining of the oil. The dual element filtering configuration used in the present invention further permits a reduction in the overall size of the separator 1 for a given air flow capacity.

Large radial forces are supported by the heavy perforated steel cylinder 8. Layers 31 in the outer filter element 6 are wrapped tightly around the perforated steel cylinder 8 and the layers 33 in the inner filtering element 10 are wrapped around the inner perforated steel cylinder 12. This construction provides effective filtering capability with a minimum pressure drop in the air passing through the separator 1.

The separator 40 shown in Figure 2 is similar to those generally used in the prior art to separate oil mist from compressor exhaust air. In such prior art the separator has three radially spaced concentric perforated steel cylinders 42, 46 and 50. The outer filtering stage has a plurality of layers of fiber glass medium 44 positioned between concentrically spaced glass scrims 41 and 43. The outer filter element is held between the outer and central steel cylinders 42 and 46. The inner filter element has a plurality of layers of fiber glass medium 48 held between a vinyl coated glass scrim 45 and the inner perforated steel cylinder 50. The prior art separator 40 has less oil loading surface area than the pleated separator 1 of the present invention. Consequently, the present separator 1 can be made much smaller than the prior art separator 40 and still handle the same air flow capacity. In addition, the plurality of fibre glass medium wrappings 44 and 48 in the prior art separator 40 tend to compress and compact more easily than the agglomerating and filter medium in the present separator 1 when subjected to high pressure air streams. When the fibre glass medium layers 44 and 48 in the prior art separator 40 are compressed, a significant pressure drop occurs. The present separator 1 avoids this problem.

Figures 3 and 4 show other embodiments of the present invention and mounting supports used with the present invention.

In the separator shown in Figure 3, a mounting end 64 is supplied with gaskets 84. Tube 90 withdraws oil from within the filter. Straps 93 hold the casings assembled.

A horizontal mounting of the separator unit is shown in Figure 4. A tank (not shown) has a heavy cylinder (not shown) with a welded end plate 144. A separator unit is inserted through a large upper opening in welded end plate 144 and a cover plate 146 is bolted to the end plate with the gasketed filter flanges in between.

A central opening (not shown) in cover plate 146 flows oil free dry compressed air outward through connected piping, which is not shown. An oil opening 150 near the bottom of the plate is connected to piping which flows oil to the intake of a compressor. Oil which collects between first and second stages flows outward through a short pipe 152 and through oil opening 150 in cover plate 146.

The screens 2, 8, 12 may be aluminium.

The filter material may be synthetic material.

The outer layers of filter material may be wrapped more tightly than the inner layers.

## Claims

1. A liquid-gas separator comprising a series of concentric annular filter elements arranged inside an outer cylindrical gas permeable casing between end supports to provide a first filtering stage arranged to agglomerate fine liquid droplets entrained in gas entering the separator into larger liquid droplets, and a second filtering stage arranged to separate such larger droplets from gas leaving the separator; characterised in that the first filter stage (4) comprises disposed between two supporting gas permeable sheets (20, 30) at least two layers (22, 26) of glass fibre medium with an intermediate layer (24) of glass fibre sheet (24) to form a sandwich construction, the sandwich being folded into a sinuously pleated arrangement; and in that said second filter stage (6, 10) is disposed inside the first filter stage and comprises radially separated second (6) and third (10) filter elements supported by respective second and third cylindrical gas permeable members (8, 12) against the pressure of gas flowing through the filter elements.

2. A separator as claimed in Claim 1, characterised in that said first filter element comprises a further layer (28) of glass fibre medium disposed downstream of said two layers (22, 26).

3. A separator as claimed in Claim 1 or 2, characterised in that said second and third filter elements (6, 10) each comprise two layers (31, 33) of filter medium sandwiched between vinyl coated glass fibre scrim material (32, 34, 36, 38).

4. A separator as claimed in Claims 1, 2 or 3, characterised in that the layers (31) of filter medium in said second filter element (6) are wrapped more tightly than the layers (33) of filter medium in said third filter element (10).

## Revendications

1. Séparateur liquide-gaz comprenant une série d'éléments filtrants annulaires concentriques disposés dans une enveloppe externe cylindrique perméable aux gaz entre des supports d'extrémités pour réaliser un premier étage de filtration prévu pour agglomérer les fines gouttelettes de liquide entraînées dans le gaz entrant dans le séparateur pour en faire de plus grosses gouttelettes de liquide, et un deuxième étage de filtration prévu pour séparer ces grosses gouttelettes du gaz sortant du séparateur, caractérisé en ce que le premier étage de filtration (4) comprend, disposées entre deux feuilles de support (20, 30) perméables aux gaz, au moins deux couches (22, 26) d'un matériau en fibre de verre avec une couche intermédiaire (24) de feuille de fibre de verre pour former une construction en sandwich, le sandwich étant plié pour former une disposition en plis sinueux, et en ce que ledit deuxième étage de filtration (6, 10) est disposé à l'intérieur du premier étage de filtration et comprend un deuxième élément filtrant (6) et un troisième élément filtrant (10) séparés radialement et supportés respectivement par un deuxième (8) et par un troisième (12) élément cylindrique perméable aux gaz pour résister à la pression du gaz circulant à travers les éléments filtrants.

2. Séparateur selon la revendication 1, caractérisé en ce que ledit premier élément filtrant comprend une couche supplémentaire (28) de matériau en fibre de verre disposée en aval des dites deux couches (22, 26).

3. Séparateur selon la revendication 1 ou 2, caractérisé en ce que lesdits deuxième et troisième éléments filtrants (6, 10) comprennent chacun deux couches (31, 33) de matière filtrante prise en sandwich entre des toiles légères en fibre de verre enduites de vinyle (32, 34, 36, 38).

4. Séparateur selon les revendications 1, 2 ou 3, caractérisé en ce que les couches (31) de matière filtrante dans ledit deuxième élément filtrant (6) sont bobinées plus serrées que les couches (33) de matière filtrante dans ledit troisième élément filtrant (10).

**Patentansprüche**

1. Flüssigkeits/Gas-Separator, umfassend eine Reihe konzentrischer ringförmiger Filterelemente, welche innerhalb eines äußeren zylindrischen gasdurchlassigen Gehäuses zwischen Endabstützungen angeordnet sind, um eine erste Filterstufe zum Agglomerieren feiner, von dem in den Separator eintretenden Gas mitgeführter Flüssigkeitströpfchen zu größeren Flüssigkeitströpfchen vorzusehen und eine zweite Filterstufe zum Trennen derartiger größerer Tröpfchen aus dem den Separator verlassenden Gas, dadurch gekennzeichnet, daß die erste Filterstufe (4) wenigstens zwei zwischen zwei stützenden, gasdurchlässigen Platten (20, 30) angeordnete Schichten (22, 26) eines Glasfasermaterials mit einer Zwischenschicht (24) aus einer Glasfaserplatte (24) umfaßt, welche eine Sandwichkonstruktion bilden, wobei das Sandwich eine sinusförmig gefaltete Anordnung bildet, und daß die zweite Filterstufe (6, 10) innerhalb der ersten Filterstufe angeordnet ist und radial beabstandete zweite (6) und dritte (10) Filterelemente umfaßt, welche jeweils durch zweite bzw. dritte zylindrische, gasdurchlässige Teile (8, 12) gegen den Druck des durch die Filterelemente strömenden Gases abgestützt werden.

2. Separator nach Aspruch 1, dadurch gekennzeichnet, daß das erste Filterelement eine weitere Schicht (28) eines Glasfasermaterials umfaßt, welche stromabwärts der beiden Schichten (22, 26) angeordnet ist.

3. Separator nach Anspruch 1 oder 2, dadurch gekennzeichnet, daß das zweite und dritte Filterelement (6, 10) jeweils zwei Schichten (31, 33) eines Filtermaterials umfaßt, welches sandwichartig zwischen Vinyl-beschichtetem Glasfasergewebematerial (32, 34, 36, 38) angeordnet ist.

4. Separator nach einem der Ansprüche 1 bis 3, dadurch gekennzeichnet, daß die Schichten (31) des Filtermaterials im zweiten Filterelement (6) dichter gewickelt sind als die Schichten (33) des Filtermaterials im dritten Filterelement (10).

FIG.1

FIG.2

PRIOR ART

FIG.4

FIG.3